# EUROPEAN PATENT SPECIFICATION

(11) **EP 3 271 054 B1**
(45) Date of publication and mention of the grant of the patent: **17.02.2021**
(21) Application number: 16765894.7
(22) Date of filing: 21.03.2016
(51) Int. Cl.: B01D 61/14, C11B 1/10, C11B 3/00, A23D 9/013, B01D 61/02

(54) **METHODS FOR OBTAINING PHOSPHOLIPIDS AND COMPOSITIONS THEREOF**
VERFAHREN ZUR HERSTELLUNG VON PHOSPHOLIPIDEN UND ZUSAMMENSETZUNGEN DAVON
PROCÉDÉS D'OBTENTION DE PHOSPHOLIPIDES ET COMPOSITIONS ASSOCIÉES

(30) Priority: 19.03.2015 US 201562135384 P
(43) Date of publication of application: 24.01.2018
(73) Proprietor: Arctic Nutrition AS, 6155 Orsta (NO)
(72) Inventor: SAEBO, Per Christian, 6155 Orsta (NO); MANCINELLI, Daniele, 6155 Orsta (NO)
(74) Representative: Potter Clarkson
(86) International application number: PCT/US2016/023442
(87) International publication number: WO 2016/149704

(56) References cited:
- WO-A1-00/78903
- JP-A- 2001 072 693
- US-A- 5 434 183
- US-A1- 2003 209 493
- US-A1- 2009 028 989
- US-A1- 2009 028 989
- US-A1- 2011 223 246
- US-A1- 2014 250 669
- US-B1- 6 217 926
- US-B2- 8 846 604
- US-B2- 8 916 156
- TANAKA Y ET AL: "Extraction of Phospholipids from Salmon Roe with Supercritical Carbon Dioxide and an Entrainer", JOURNAL OF OLEO SCIENCE, JAPAN OIL CHEMISTS SOCIETY, TOKYO, JP, vol. 53, no. 9, 1 January 2004 (2004-01-01), pages 417-424, XP003021522, ISSN: 1345-8957
- SIM J S: "New Extraction and Fractionation Method for Lecithin and Neutral Oil from Egg Yolk", EGG USES AND PROCESSING TECHNOLOGIES: NEW DEVELOPMENTS, XX, XX, 1 January 1994 (1994-01-01), pages 128-138, XP002111454,

## Description

### BACKGROUND OF THE INVENTION

The omega-3 fatty acid alpha linolenic acid (ALA) is an essential fatty acid because it is required for human health and is not produced in the human body. The two major health promoting omega-3 polyunsaturated fatty acids eicosapentaenoic acid (EPA) and docosahexaenoic acid (DHA) can be synthesized in the body from ALA, but are considered conditionally essential because ALA is inefficiently converted to EPA and DHA, and ALA is often present at low levels in the diet. EPA and DHA are naturally found in certain cold-water fatty fish. The modern diet is typically deficient in omega-3 essential fatty acids and has become overloaded with pro-inflammatory omega-6 fatty acids, especially arachidonic acid. This heavy imbalance of omega-6 to omega-3 fatty acids in the modern diet is thought to lead to an overall inflammatory state that contributes to several diseases.

Adequate amounts of omega 3 fatty acids, including EPA and DHA, can be obtained in the diet from cold-water fatty fish such as herring, salmon, tuna, and mackerel. However, these fish species may contain high levels of mercury, polychlorinated biphenyls (PCBs), dioxins or other contaminants. Thus achieving an optimal and consistent amount of omega-3 fatty acids through the intake of fish alone raises a number of safety concerns. Additionally, EPA and DHA can be also obtained as (phospholipid ester) extracts from the roe of cold-water fatty fish. However, methods for obtaining sufficient quantities of phospholipids that include EPA and DHA in sufficiently stable forms are often expensive, time consuming, and have a variety of other limitations.

Lipid extraction from animal tissue using organic solvents is commonly carried out by contacting the dried and ground tissue with an organic solvent capable of dissolving the desired lipids, followed by evaporating the solvent from the lipids by warming under reduced pressure to yield the virtually solvent free lipid extract. This process has been used on an industrial scale for the manufacture of products such as polar lipids (e.g., phospholipids) from fish meal and krill meal. Unfortunately, these practices can negatively affect the quality of the resulting products.

For example, typical tissue drying techniques stress the material and its biological components during the application of the heat needed for the efficient removal of water. Added heat during the drying of animal tissue speeds the oxidation and breakdown of omega-3 fatty acid components into degradation products. These degradation products worsen the taste and odor of the final product (i.e., heating increases rancidity). The drying process can also cause caramelization and initiate polymerization processes in tissues rich in glycolipids. Furthermore, drying at elevated temperatures can cause a "burned" taste and smell in the dried tissue, as well as in the extracted product. Lipid extracts from dried materials will also typically have a rather dark color due to the formation of caramelized and polymerized components during the drying process.

Phospholipids in animal tissue are naturally surrounded by various quantities of water. As such, they are more difficult to dry than neutral lipids (fats and oils) because the neutral lipids can be more easily separated from aqueous extraction phases compared to the polar phospholipids. For these reasons, the characterization of phospholipid products is commonly described by both water activity as well as absolute water content (e.g., as measured by the Karl-Fisher method). The same terminology is also used for animal tissue material with limited water content, e.g., fish meal.

Drying animal tissues to very low water levels can cause the formation of new interactions and binding between polar lipids and other components of the tissue matrix, particularly with various protein species. These interactions and the resulting lower availability of phospholipids are one reason there is a need for more improved extraction processes in terms of temperature, time, and/or yields of lipids during extraction. The drying process is also time and labor-intensive, adding to the cost of the process. These drawbacks are avoided by employing the process described herein.

The evaporation of solvents from the lipid material by heat, typically under reduced pressure, also concentrates any limited volatility components together with the lipid materials. These components include most environmental pollutants already present in the animal tissue such as dioxins, furans, polychlorinated biphenyls (PCBs), polybrominated diphenyl ethers (PBDEs), polycyclic aromatic hydrocarbons (PAHs), and pesticides. These pollutants are generally fat soluble and are typically extracted from the animal tissue together with the lipids. The levels of pollutants in the lipid fraction therefore may be tenfold or more increased from the wet starting material and will in general have to be reduced by further processing of the extracted lipid material. The evaporation will further concentrate other low volatility components in the tissue, including metals, salts, and minerals, many of which may need to be reduced by further processing. The evaporation will hence also concentrate any impurity in the solvent with a higher boiling point than the solvent itself. In extraction processes requiring a high amount of solvent (e.g., ethanol) combined with a limited amount of extract, such low volatility impurities from the solvent can typically be concentrated 50 times or more.

Accordingly, there is a need for efficient processes for obtaining omega-3 phospholipids with high stability, good digestion properties, low safety and environmental concerns, and without "fishy odors". Such phospholipids could be advantageously used for incorporation into dietary supplements, nutritional supplements and food products.

US 2009/028989 was published on 29 January 2009 and discloses a phospholipid composition obtainable by a process comprising contacting a fish meal with an organic solvent to produce a lipid containing liquid and subjecting said liquid to microfiltration optionally followed by solvent stripping. JP2001/072693 was published on 21 March 2001 and discloses processes for producing purified egg yolk lecithin comprising ultrafiltration of micellar solutions of lecithin and non-micellar solutions of lecithin.

WO 00/78903 was published on 28 December 2000 and discloses a gentle extraction of lipids with an organic solvent from biological material, by mincing of the biological material in the presence of an acid with subsequent addition of the solvent or mincing in the presence of both the acid and the solvent after which the liquid phase is separated and lipids are recovered therefrom.

US 2011/223246 was published on 15 September 2011 and discloses medicaments and therapeutic compositions containing phospholipids having 4,7,10,13,16,19-docosahexaenoic acid covalently bound thereto and at least one omega-3 polyunsaturated fatty acid, or at least one pharmaceutically acceptable omega-3 polyunsaturated fatty acid derivative or mixtures thereof.

Tanaka et al. J. Oleo. Sci., Vol. 53, No. 9, 417-424 (2004) discloses the extraction of phospholipids from salmon roe with supercritical carbon dioxide and an entrainer.

US 6,217,926 was published on 17 April 2001 and discloses an aqueous extraction process to selectively remove phospholipids from egg yolks and to separate a majority of the proteins from the egg yolk material using ionic strength, pH and gravitational centrifuge forces.

JS Sim Egg Uses and Processing Technologies: New Developments, Chapter 11, pages 128-138 was published on 1 January 2004 and discloses a process for separating yolk lipids from egg yolk using an aqueous ethanolic solvent system.

US 2003/209493 was published on 13 November 2003 and discloses a process for refining and degumming edible oils by ultrafiltration which produces a permeate fraction with reduced phosphatide content and retentate with increased phosphatide content.

### SUMMARY

According to the first aspect of the present invention, there is provided a method for providing a phospholipid composition in accordance with claim 1.

According to the second aspect of the present invention, there is provided a method for producing a phospholipid extract with low PCBs, PCDDs, PCDFs and PAHs content in accordance with claim 10.

According to the third aspect of the present invention, there is provided a method for providing a phospholipid composition in accordance with claim 12.

Docosahexaenoic acid (DHA) has important structural roles and unique anti-inflammatory roles in the body. Most sources of omega-3 fatty acids are richer in EPA than DHA, therefore new sources of DHA-rich fatty acids are needed. Phospholipids are also important for animal nutrition and can be used to provide these critical fatty acids. The invention described herein provides methods for providing high DHA content phospholipid compositions and other useful compositions.

The invention thus relates to methods for obtaining solid and fluid lipid compositions comprising a proportionally high content of DHA. The compositions are obtained from non-shellfish or non-crustacean sources such as fish roe. The compositions are useful as therapeutic compositions, food additives, and the like. They can also be combined with carrier oils and/or other additives to provide further useful nutritional additives, products, and therapeutic compositions.

The invention provides processes for extracting lipid compositions from fish roe and avian egg yolks, to provide a phospholipid (PL) concentrate or phospholipid oil. When the extraction is from fish roe, the resulting composition has high amounts of omega-3 phospholipids. The process includes contacting fish roe or avian egg yolks with a polar solvent; extracting a lipid fraction from the fish roe or the avian egg yolks; and removing the solvent from the lipid fraction, to provide a solid, semisolid or highly viscous, mainly polar lipid composition comprising phospholipids, particularly omega-3 phospholipids in the case of fish roe. For fish roe, at least 40%, or at least 50%, of the total fatty acids can be omega-3 fatty acids (with respect to the phospholipids of the composition or with respect to the total composition). As described herein, at least about 30% of the total fatty acids can be omega-3 fatty acids.

The process described herein has been found to meet the quality and process challenges described above. The process can include extraction from un-dried tissue and subsequent membrane filtration to separate solvents from the lipid fraction. By contacting undried tissue directly with a solvent, the stress and quality reduction of the starting material caused by a drying process is avoided. Due to the relatively large amounts of solvent typically used for extractions, as compared to the amount of animal tissue, the increased polarity of the solvent due to the introduction of water from the tissue will not be beyond the limit that allows an efficient extraction of the polar lipids from the tissue. The tissue is fish roe, including mature fish roe, and especially immature fish roe, or the yolk of avian eggs.

A second extraction from the same tissue by fresh solvent can provide additional products, in the form of lipids in general, and neutral lipids in particular. The number of extractions from the same tissue, and the amount of solvent used for each extraction cycle, can be tailored towards the purpose of the extraction. One to four extractions can be suitably carried out for most purposes. The extracts can optionally be combined to yield the complete lipid extract from the tissue or be kept separate to yield fractions with various lipid compositions, e.g., in terms of polar lipids content.

In one aspect, the invention provides methods for providing a composition with high amounts of omega-3 phospholipids. The methods include contacting undried fish roe, , with a polar solvent and mixing the roe and solvent to form a first mixture. As described herein, the fish roe can be partially dried fish roe. The mixture can be a suspension, an emulsion, or a combination thereof, and can include both dissolved and suspended proteins and other components. The method includes filtering the first mixture to remove solid particles larger than 1 µm in size, to provide a solution of the polar solvent comprising extracted lipids. As described herein, the filtration can be carried out to filter a variety of particle sizes including particles larger than about 0.1 µm in size, larger than about 0.5 µm in size. In one embodiment, the filtration can be carried out to filter particle sizes including particles larger than about 2 µm in size, larger than about 10 µm in size, or larger than about 20 µm in size. The resulting filtrate is then subjected to membrane filtration. As described herein, the membrane has a MWCO of about 200 Daltons or about 250 Daltons. In this aspect of the present invention, the membrane has a MWCO of 300 Daltons. The membrane filtration provides a retentate comprising greater than 10 dry wt.% lipids. As described herein, the retentate comprises greater than 5 dry wt.% lipids. The retentate can contain less than about 10% of the initial polar solvent.

The retentate comprises phospholipids wherein at least 40% of the total fatty acid moieties are omega-3 fatty acids, wherein the fatty acid moieties of the retentate comprise docosahexaenoic acid (DHA) and eicosapentaenoic acid (EPA), and the DHA to EPA ratio is at least about 2:1. The retentate comprises less than 2 wt. % ash content (e.g. salt), based on dry weight. The retentate can include one or more of (a) less than about 2 wt.% free fatty acids, (b) less than about 5 wt.% free cholesterol, (c) less than 2 wt.% amino acids, based on dry weight.

The retentate can be subjected to drying under reduced pressure to provide a solid. In some embodiments, the fish roe is immature fish roe, for example, immature herring roe, immature salmon roe, immature mackerel roe, immature menhaden roe, or a combination thereof. As described herein, the eggs are chicken eggs, although the resulting products do not contain high amounts of omega-3 phospholipids in this case.

The retentate can include about 50 wt.% to about 95 wt.% phospholipids. About 30-70 wt.% of the total fatty acid moieties in the phospholipids can be omega-3 fatty acids, based on dry weight. The retentate can include at least about 50 wt.% of phosphatidylcholine, with respect to the total weight of the composition. In some embodiments, the retentate is characterized by a bright yellow color.

In one embodiment, the fish roe is a non-waxy fish roe wherein the wax content of the roe is less than about 50 wt.%, less than about 40 wt.%, less than about 30 wt.%, less than about 20 wt.%, less than about 15 wt.%, less than about 10 wt.%, less than about 7.5 wt.%, or less than about 5 wt.%, typically about 5-15 wt.%.

In some embodiments, after filtration or nanofiltration, the retentate comprises greater than about 15 dry wt.% lipids, greater than about 20 dry wt.% lipids, greater than about 25 dry wt.% lipids, greater than about 30 dry wt.% lipids, greater than about 40 dry wt.% lipids, or greater than about 50 dry wt.% lipids.

In another aspect of the present invention, there is provided a method of producing a phospholipid extract with low PCBs, PCDDs, PCDFs and PAHs content (e.g., less than half of that contained in the starting material) comprising:
contacting phospholipid-rich marine fish roe having 5 wt.% or less wax content, with a polar solvent and mixing the roe and solvent to form a first mixture; filtering the first mixture to remove solid particles larger than 1 µm in size, to provide a solution of the polar solvent comprising lipids and phospholipids. As described herein, the solution is passed through a nanofiltration membrane having a MWCO of about 700 Daltons or about 400 Daltons In this aspect of the present invention, the solution is passed through a membrane having a MWCO of300 Daltons. The membrane can have a MWCO of about 250 Daltons, or about 200 Daltons (or a suitable MWCO described elsewhere herein). The extract can also have significantly reduced levels of lead, bromide, potassium, and sodium, which can be reduced to less than 3%, 3%, 10%, and 10%, respectively, in the final composition, as a percentage of initial content. Similar reductions in mercury and cadmium (at least five-fold and/or up to ten-fold reductions) were obtained.

When a fish roe extract is subjected to nanofiltration, the filtration provides a retentate comprising less than 10% of the initial polar solvent. The retentate can include greater than 10 wt.% phospholipids. At least 40% of the total fatty acid moieties of the retentate are omega-3 fatty acids and the fatty acid moieties of the retentate comprise docosahexaenoic acid (DHA) and eicosapentaenoic acid (EPA), and the DHA to EPA ratio at least 2:1. The retentate comprises less than 2 wt. % ash content. The retentate can include one or more of the following properties: (a) less than about 3 wt.% free fatty acids, (b) less than 5 wt.% cholesterol, (c) less than 2 wt.% amino acids, (d) less than 1 pg WHO-TEQ/g dioxins and furans, (e) less than 2 pg WHO-TEQ/g dioxin-like PCBs, (f) less than 50 ng/g of total PCB (209 congeners), and (g) less than 1 ng/g benzo(a)pyrene. In one specific embodiment, the retentate comprises less than about 1 wt.% or less ash content (e.g., sodium chloride and other salts). As described herein, the retentate comprises less than 10% lead ions, In one embodiment, the retentate comprises less than 5% lead ions, or less than 3% lead ions, compared to the initial concentration relative to the amount of phospholipids.

As discussed herein, the extraction and filtration processes can also be applied to avian eggs, such as chicken egg yolks. Accordingly, another aspect of the present invention provides a method for providing a phospholipid composition comprising contacting avian egg yolks with a polar solvent and mixing the egg yolks and solvent to form a first mixture; filtering the first mixture to remove solid particles larger than 1 µm in size, to provide a solution of the polar solvent comprising extracted lipids; subjecting the solution to membrane filtration wherein the membrane has a MWCO of 300 Daltons, to provide a retentate comprising greater than 10 dry wt.% lipids; wherein the retentate comprises 20 wt.% to 50 wt.% phospholipids and wherein the retentate comprises less than 2 wt.% ash content, based on dry weight. The avian egg yolk can be a chicken egg yolk.

### BRIEF DESCRIPTION OF THE DRAWINGS

The following drawings form part of the specification and are included to further demonstrate certain embodiments or various aspects of the invention. In some instances, embodiments of the invention can be best understood by referring to the accompanying drawings in combination with the detailed description presented herein. The description and accompanying drawings may highlight a certain specific example, or a certain aspect of the invention. However, one skilled in the art will understand that portions of the example or aspect may be used in combination with other examples or aspects of the invention.
**Figure 1****.** Examples of phospholipid structures, according to various embodiments. One or the other fatty acid chain moiety and its associated carbonyl can be absent to provide hydroxyl groups in various embodiments (i.e., lysophospholipids). The fatty acid chain moieties can be, for example, EPA, DHA, or a group recited in **Table 2-5.**
**Figure 2****.** An example of a process for the production of a phospholipid concentrate (PLC) and isolated fish roe protein, according to one embodiment. The process can be similarly conducted with avian eggs such as chicken eggs, although with lesser omega-3 phospholipid content.
**Figure 3****.** A picture of a phospholipid concentrate from frozen wet roe prepared according to the methods described herein (left), and a concentrate prepare using standard extraction conditions from dried roe (right).

### DEFINITIONS

As used herein, the recited terms have the following meanings. All other terms and phrases used in this specification have their ordinary meanings as one of skill in the art would understand. Such ordinary meanings may be obtained by reference to technical dictionaries, such as Haw ley's Condensed Chemical Dictionary 14th Edition, by R.J. Lewis, John Wiley & Sons, New York, N.Y., 2001.

References in the specification to "one embodiment", "an embodiment", etc., indicate that the embodiment described may include a particular aspect, feature, structure, moiety, or characteristic, but not every embodiment necessarily includes that aspect, feature, structure, moiety, or characteristic. Moreover, such phrases may, but do not necessarily, refer to the same embodiment referred to in other portions of the specification. Further, when a particular aspect, feature, structure, moiety, or characteristic is described in connection with an embodiment, it is within the knowledge of one skilled in the art to affect or connect such aspect, feature, structure, moiety, or characteristic with other embodiments, whether or not explicitly described.

The singular forms "a," "an," and "the" include plural reference unless the context clearly dictates otherwise. Thus, for example, a reference to "a compound" includes a plurality of such compounds, so that a compound X includes a plurality of compounds X. It is further noted that the claims may be drafted to exclude any optional element. As such, this statement is intended to serve as antecedent basis for the use of exclusive terminology, such as "solely," "only," and the like, in connection with the recitation of claim elements or use of a "negative" limitation.

The term "and/or" means any one of the items, any combination of the items, or all of the items with which this term is associated. The phrase "one or more" is readily understood by one of skill in the art, particularly when read in context of its usage. For example, one or more components of a composition refers to one, two, three, four, or five components, or greater than five components, when more components are described.

The term "about" can refer to a variation of ± 5%, ± 10%, ± 20%, or ± 25% of the value specified. For example, "about 50" percent can in some embodiments carry a variation from 45 to 55 percent. For integer ranges, the term "about" can include one or two integers greater than and/or less than a recited integer at each end of the range. Unless indicated otherwise herein, the term "about" is intended to include values, e.g., weight percentages, proximate to the recited range that are equivalent in terms of the functionality of the individual ingredient, the composition, or the embodiment.

As will be understood by the skilled artisan, all numbers, including those expressing quantities of ingredients, properties such as molecular weight, reaction conditions, and so forth, are approximations and are understood as being optionally modified in all instances by the term "about." These values can vary depending upon the desired properties sought to be obtained by those skilled in the art utilizing the teachings of the descriptions herein. It is also understood that such values inherently contain variability necessarily resulting from the standard deviations found in their respective testing measurements.

As will be understood by one skilled in the art, for any and all purposes, particularly in terms of providing a written description, all ranges recited herein also encompass any and all possible sub-ranges and combinations of sub-ranges thereof, as well as the individual values making up the range, particularly integer values. A recited range (e.g., weight percentages or carbon groups) includes each specific value, integer, decimal, or identity within the range. Any listed range can be easily recognized as sufficiently describing and enabling the same range being broken down into at least equal halves, thirds, quarters, fifths, or tenths. As a non-limiting example, each range discussed herein can be readily broken down into a lower third, middle third and upper third, etc. As will also be understood by one skilled in the art, all language such as "up to", "at least", "greater than", "less than", "more than", "or more", and the like, include the number recited and such terms refer to ranges that can be subsequently broken down into sub-ranges as discussed above. In the same manner, all ratios recited herein also include all sub-ratios falling within the broader ratio. Accordingly, specific values recited for radicals, substituents, and ranges, are for illustration only; they do not exclude other defined values or other values within defined ranges for radicals and substituents.

One skilled in the art will also readily recognize that where members are grouped together in a common manner, such as in a Markush group, the invention encompasses not only the entire group listed as a whole, but each member of the group individually and all possible subgroups of the main group. Additionally, for all purposes, the invention encompasses not only the main group, but also the main group absent one or more of the group members. The invention therefore envisages the explicit exclusion of any one or more of members of a recited group. Accordingly, provisos may apply to any of the disclosed categories or embodiments whereby any one or more of the recited elements, species, or embodiments, may be excluded from such categories or embodiments, for example, as used in an explicit negative limitation.

The term "contacting" refers to the act of touching, making contact, or of bringing to immediate or close proximity, including at the cellular or molecular level, for example, to bring about a physiological reaction, a chemical reaction, or a physical change, e.g., in a solution, in a reaction mixture, *in vitro,* or *in vivo.*

The term "solvent" or "solvent system" as used herein refers to a liquid that can extract phospholipid molecules from marine organism tissue. Suitable solvents for extracting phospholipids from marine organism tissue include alcoholic solvents such as methanol, ethanol, propanol, and butanol, optionally with up to about 50 wt.% water. Specific useful solvent systems include 90% ethanol, 93% ethanol, and 95% ethanol, where the balance of the solvent system is water.

When a filtration step is used to remove particles of a particular size, the "size" of the particle removed refers to the size or mass of a particular particles that will not pass through a filter or membrane having pores or passages of approximately that size or smaller. For example, a filter paper having a pore size of about 15 µm will remove solid particles of about 15 µm or larger from a mixture passed through the filter paper.

An "effective amount" refers to an amount effective to treat a disease, disorder, and/or condition, or to bring about a recited effect. For example, an effective amount can be an amount effective to reduce the progression or severity of the condition or symptoms being treated. Determination of a therapeutically effective amount is well within the capacity of persons skilled in the art. The term "effective amount" is intended to include an amount of a compound described herein, or an amount of a combination of compounds described herein, e.g., that is effective to treat or prevent a disease or disorder, or to treat the symptoms of the disease or disorder, in a host. Thus, an "effective amount" generally means an amount that provides the desired effect.

A "fatty acid" refers to an alkanoic acid or an alkanoic acid moiety (i.e., the residue left after formal removal of the acid hydrogen), where the fatty acid includes at least about nine or ten carbon atoms. Non-limiting examples of fatty acids include decanoic acid (10:0), undecanoic acid (11:0), 10-undecanoic acid (11:1), lauric acid (12:0), *cis*-5-dodecanoic acid (12:1), tridecanoic acid (13:0), myristic acid (14:0), myristoleic acid (*cis*-9-tetradecenoic acid, 14:1), pentadecanoic acid (15:0), palmitic acid (16:0), palmitoleic acid (*cis*-9-hexadecenoic acid, 16:1), heptadecanoic acid (17:1), stearic acid (18:0), elaidic acid (*trans*-9-octadecenoic acid, 18:1), oleic acid (*cis*-9-octadecanoic acid, 18:1), nonadecanoic acid (19:0), eicosanoic acid (20:0), *cis*-11-eicosenoic acid (20:1), 11,14-eicosadienoic acid (20:2), heneicosanoic acid (21:0), docosanoic acid (22:0), erucic acid (*cis*-13-docosenoic acid, 22:1), tricosanoic acid (23:0), tetracosanoic acid (24:0), nervonic acid (24:1), pentacosanoic acid (25:0), hexacosanoic acid (26:0), heptacosanoic acid (27:0), octacosanoic acid (28:0), nonacosanoic acid (29:0), triacosanoic acid (30:0), *trans* vaccenic acid (*trans*-11-octadecenoic acid, 18:1), tariric acid (octadec-6-ynoic acid, 18:1), and ricinoleic acid (12-hydroxyoctadec-*cis*-9-enoic acid, 18:1) and ω3, ω6, and ω9 fatty acyl residues such as 9,12,15-octadecatrienoic acid (a-linolenic acid) [18:3, ω3]; 6,9,12,15-octadecatetraenoic acid (stearidonic acid) [18:4, ω3]; 11,14,17-eicosatrienoic acid (dihomo-α-linolenic acid) [20:3, ω3]; 8,11,14,17-eicosatetraenoic acid [20:4, ω3], 5,8,11,14,17-eicosapentaenoic acid [20:5, ω3]; 7,10,13,16,19-docosapentaenoic acid [22:5, ω3]; 4,7,10,13,16,19-docosahexaenoic acid [22:6, ω3]; 9,12-octadecadienoic acid (linoleic acid) [18:2, ω6]; 6,9,12-octadecatrienoic acid (y-linolenic acid) [18:3, ω6]; 8,11,14-eicosatrienoic acid (dihomo-γ-linolenic acid) [20:3 ω6]; 5,8,11,14-eicosatetraenoic acid (arachidonic acid) [20:4, ω6]; 7,10,13,16-docosatetraenoic acid [22:4, ω6]; 4,7,10,13,16-docosapentaenoic acid [22:5, ω6]; 6,9-octadecadienoic acid [18:2, ω9]; 8,11-eicosadienoic acid [20:2, ω9]; 5,8,11-eicosatrienoic acid (mead acid) [20:3, ω9]; *trans-*10,*cis-*12 octadecadienoic acid; *cis-*10,*trans*-12 octadecadienoic acid; *cis-*9,*trans-*11 octadecadienoic acid; and *trαns-*9,*cis-*11 octadecadienoic acid. The acyl residues of a fatty acid moiety can also be conjugated, hydroxylated, epoxidized, and/or hydroxyepoxidized acyl residues.

An "omega-3 fatty acid" refers to a polyunsaturated fatty acid that has the final double bond in the hydrocarbon chain between the third and fourth carbon atoms from the methyl end of the molecule or moiety. Non-limiting examples of omega-3 fatty acids include Δ-5,8,11,14,17-eicosapentaenoic acid (EPA), Δ-4,7,10,13,16,19-docosahexanoic acid (DHA) and Δ-7,10,13,16,19-docosapentanoic acid (n-3 DPA).

The term lipid includes mono-, di- and triglycerides, phospholipids, free fatty acids, fatty alcohols, cholesterol, cholesterol esters, and the like.

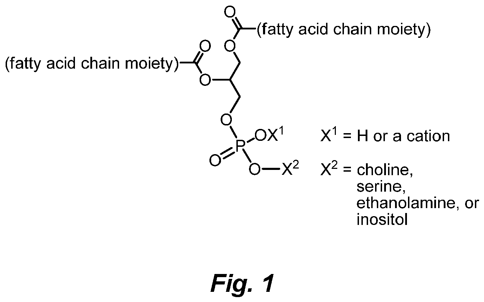

The term "phospholipid" as used herein refers to a glycerol phosphate with an organic headgroup such as choline, serine, ethanolamine or inositol and zero, one or two (typically one or two) fatty acids esterified to the glycerol backbone. See **Figure 1**. Phospholipids include, but are not limited to, phosphatidylcholine, phosphatidylethanolamine, phosphatidylserine and phosphatidylinositol as well as corresponding lysophospholipids. For example, a "phospholipid" can refer to an organic compound of Formula I: 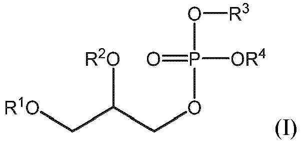 wherein R¹ is a fatty acid residue or H, R² is a fatty acid residue or H, R³ is H or a nitrogen containing compound such as choline (HOCH₂CH₂N⁺(CH₃)₃OH⁻), ethanolamine (HOCH₂CH₂NH₂), inositol, or serine, and R⁴ is a negative charge, H, or a cation such as an alkali metal cation (for example, Li⁺, Na⁺, or K⁺). In some embodiments, the nitrogen of ethanolamine can be acylated, for example, by acetate or by the acyl moiety of a fatty acid. In some embodiments, R¹ and R² are not simultaneously H. When R³ is H, the compound is a diacylglycerophosphate (also known as phosphatidic acid), while when R³ is a nitrogen-containing compound, the compound is a phosphatide such as lecithin, cephalin, phosphatidyl serine, or plasmalogen. The R1 site is referred to as position 1 of the phospholipid (per the stereospecific [sn] system of nomenclature), the R2 site is referred to as position 2 of the phospholipid (the sn2 position), and the R3 site is referred to as position 3 of the phospholipid (the sn3 position). Phospholipids also include phosphatidic acid and/or lysophosphatidic acid. Sphingolipids containing a phosphorus group are grossly classified as phospholipids; they contain a sphingosine base rather than a glycerol base.

The term "phospholipid concentrate" or "PL concentrate" refers to a mass of phospholipids that can be a solid at room temperature (∼23 °C). A PL concentrate as described herein can have a melting point interval in the range of about 28 °C to about 65 °C. Some PL concentrates can have a melting point interval in the range of about 28 °C to about 38 °C, about 28 °C to about 35 °C, about 28 °C to about 34 °C, about 35 °C to about 65 °C, about 40 °C to about 60 °C, about 45 °C to about 55 °C, or about 55 °C to about 65 °C. Other PL concentrates can have a melting point interval in the range of about 50 °C to about 60 °C, about 40 °C to about 50 °C, about 30 °C to about 40 °C, about 30 °C to about 38 °C, about 30 °C to about 35 °C, or about 30 °C to about 33 °C. The melting point interval can be an interval of about 2, about 3, about 4, about 5, about 7, or about 10 °C within one of the recited ranges. The PL concentrate can be pliable and the solid can be dissolvable in oils such as vegetable or fish oils.

As used herein, a "PL oil" refers to a viscous oil derived from a PL concentrate where the PL concentrate is further processed or purified to provide the viscous oil, rich in phospholipids.

As used herein, the term "lipid composition" refers to a concentrate or oil that can be extracted from a fish composition, especially immature fish roe. The lipid composition typically contains about 60-70 wt.%, about 62-67 wt.%, or about 63-66 wt.% of phospholipids, and certain neutral lipids and other components, for example, as outlined in **Table 3-2.** As would be readily recognized by one of skill in the art, the fatty acid profile of the phospholipids themselves will have a higher DHA and EPA content by weight than the overall lipid composition (e.g., a PL concentrate or PL oil) because of the presence of non-fatty acid components in such compositions.

The term "omega-3 phospholipid" as used herein refers to a to phospholipid molecule having an omega-3 fatty acid residue at the sn1 position, the sn2 position, or both positions, of a phospholipid molecule.

A composition having a "high amount" of omega-3 phospholipids refers to a composition where at least about 30 wt.% of the fatty acid groups on the phospholipid are omega-3 fatty acid moieties. A high amount of omega-3 phospholipid can also be a phospholipid composition where the fatty acid groups are the phospholipids are at least about 40 wt.% or at least about 50 wt.% omega-3 fatty acid groups, with respect to the total amount of fatty acids in the phospholipids of the composition.

The term "aquatic eggs" refers to fish roe and the eggs of other aquatic animals.

The term "roe" refers to the eggs of fish. The term "soft roe" refers to the milt of male fish containing the sperm.

The term "immature fish roe" as used herein refers to fish roe in which the eggs are primarily (e.g., greater than about 50%, greater than about 60%, greater than about 80%, or greater than about 90%) meiotic prophase arrest prior to maturation caused by a hormonal signal. Immature roe, such as immature herring roe, refers to roe collected from spring spawning herring (SSH) between late October and the end of January, for example, in Norwegian waters; whereas mature roe is collected in February and March or later, for example, near the Norwegian coast. The North Sea herring typically spawns early autumn in the western part of the North Sea, hence the immature roe is collected during late summer. The Hjort maturity scale can be used to assess maturity of fish roe (see Hay et al., "Assessing and monitoring maturity and gonad development in Pacific herring"; Can. Tech. Rep. of Fish and Aquat. Sci., Vol. 998; 1981; Government of Canada, Fisheries and Oceans). In all teleosts, oocytes appear to undergo the same basic pattern of growth, regardless of their reproductive strategy. The major developmental events occurring during oocyte development can be broadly classified into six phases, according to the state of oocytes growth; they are: oogenesis, primary oocyte growth, cortical alveolus stage, vitellogenesis, maturation and ovulation. During the early stages of oocyte development, DNA replication occurs (leptotene), homologous chromosomes pair (zygotene) and these pairs shorten and thicken (pachytene). The chromosomes then unpair into lampbrush configurations (diplotene), just before the oocyte enters a long period of cytoplasmic growth. The cytoplasmic growth of the oocyte is characterized by an enormous accumulation of yolk reserves (vitellogenesis). Meiosis resumes via a hormonal signal, and this leads to oocytes maturation. During this period, the nucleus, arrested in meiotic prophase, breaks down and the chromosomes enter first meiotic metaphase. The oocyte is then released from the ovary into the body cavity and it becomes an egg ready for fertilization. Generally, immature roe is roe prior to ovulation or swelling. In the later stages of maturation the roe also gets sticky in order for the roe to attach to each other and to the surface on which the roe is spawn. Immature roe for processing should preferably be collected prior the stage at which the roe gets sticky, this may also be prior to ovulation or swelling.

The term "undried roe" refers to a composition of roe where the natural amount of water content has not been substantially reduced, for example to less than about 70 or 75 wt.% of the roe, while fully dried roe has more than about 95 wt.% dry matter. Partially dried roe can refer to a composition of roe that has dried to the extent that water still comprises at least about 20 wt.%, at least about 30 wt.%, at least about 40 wt.%, at least about 50 wt.%, at least about 60 wt.%, of the weight of the roe. Optionally, undried roe can be processed prior to extraction with a solvent, for example, before or after stirring or blending the undried roe with the solvent for extraction, including processing steps such as treating the roe by mincing, blending, sonicating, or treating with caustic agents, enzymes, or bioactive agents, etc.

The term "physiologically acceptable carrier" refers to any carrier or excipient commonly used with pharmaceuticals, and especially for oral delivery. Such carriers or excipients include, but are not limited to, oils, starch, sucrose and lactose as well as excipients for other delivery methods such as topical and parenteral delivery.

The term "oral delivery vehicle" refers to any means of delivering a desired composition orally, including, but not limited to, capsules, pills, tablets and syrups.

The term "suspension" refers to a heterogeneous mixture containing solid particles in a fluid phase. The solid particles are typically larger than about 1 mm but can be much smaller, for example about 100 microns, about 250 microns, or about 500 microns. The internal phase (solid) of a suspension is dispersed throughout the external phase (fluid). Unlike a colloid, the solid particles of a suspension may eventually settle. The suspended particles can be visible under a microscope and can settle over time if left undisturbed. In a colloid, suspended particles can be smaller than 1 mm and do not settle from the fluid phase. Initial extracts from marine organisms can be various mixtures, including suspensions or colloids, and combinations thereof.

The term "emulsion" refers to a mixture of two or more liquids that are normally immiscible (non-mixable or unblendable, i.e., they do not form a solution). Emulsions are part of a more general class of two-phase systems of matter called colloids. The term emulsion is used when both the dispersed and the continuous phase are liquids, such as water and an oil, for example, a combination of a PL concentrate and a fish oil or other high DHA oil. In an emulsion, one liquid (the dispersed phase) is dispersed in the other (the continuous phase), to provide an oil-in-water (o/w) emulsion or a water-in-oil (w/o) emulsion. The phospholipid compositions described herein are typically provided as o/w emulsions. However, when using very high amounts of the phospholipid composition relative to water, a w/o emulsion can be prepared.

### DETAILED DESCRIPTION

Omega-3 phospholipids are an important alternative to free fatty acid, methyl- and ethyl ester and triglyceride forms of omega-3 because they provide essential fatty acids in a more bioavailable form and they are processed by the body in a more efficient manner. Many current fish oil, krill oil, and similar compositions include relatively high amounts of free fatty acids (FFAs), and often more than 20% of the DHA and EPA are in free fatty acid form (Schuchardt et al., Lipids Health Dis. (2011) 10: 145). FFAs have a foul taste and lead to digestive issues including dyspepsia (upset stomach and/or indigestion) and are therefore undesirable in supplements and food compositions. However, current methods of obtaining omega-3 phospholipids do not provide the high and consistent purity that is obtainable by the methods described herein. The invention thus provides efficient processes for obtaining omega-3 phospholipids with high stability, good digestion properties, no safety and environmental concerns, without "fishy odor", and which are highly suitable for incorporation into dietary supplements, nutritional supplements and food products.

Food allergies are a growing public health concern, with an estimated 9 million, or 4%, of adults in the United States having food allergies. The prevalence of food allergies and associated anaphylaxis appears to be on the rise. According to a study released in 2008 by the Centers for Disease Control and Prevention, an increase in food allergy of about 18% was seen in the United States between 1997 and 2007. Eight foods account for 90% of all food-allergic reactions. These include milk, eggs, peanuts, tree nuts, wheat, soy, fish, and shellfish. Allergic reactions to shellfish are generally a lifelong allergy. The estimated prevalence, some based on self-reporting, among the U.S. population is 0.4% for fish and 1.2% for crustacean shellfish. Shellfish allergies are likely underestimated because those sensitive to crustaceans may also be sensitive to mollusks and/or /bivalves. In view of these data, the ideal phospholipid source of omega-3 fatty acids should be fish (roe, milt, body)-derived, rather than shellfish/crustacean/krill derived. Thus, new marine-derived phospholipid compositions are needed that have extremely low pollutant content. Processes to obtain these compositions are provided herein, as described below.

As compared to a lipid extract from dried tissue, the lipid extract obtained by the processes described herein has less fishy taste and smell, and has a lighter color due to the milder processing conditions. Lipid compositions extracted from wet tissue do not have a smoked or burned taste and smell associated with them. The extraction from wet tissue also results in extracting the lipids from the tissue matrix prior to any new bond formation or additional linking between the lipids and the matrix that results from drying. The process thus yields the same amount of extract with a shorter processing time and/or under milder extraction conditions as compared to the extraction from dried tissue.

Additionally, separating the vast majority of solvent from the lipid product by use of membranes is beneficial for several reasons. The membrane filtration can take place at ambient temperatures and does not require the heating that most evaporation processes require, even under reduced pressure. Furthermore, the use of membrane filtration to separate the solvent from the lipid extract allows for a significant reduction in the level of environmental pollutants in the final extract, typically on the order of a 70-95% reduction in the mass or ppm of pollutants. Typical marker or indicator PCBs that can be reduced by 10-20 times or more include PCBs having IUPAC numbers 28, 52, 101, 138, 153 and 180, among others.

To concentrate a lipid extract, mainly comprising marine phospholipids and triglycerides with molecular weights in the range of 0.7-1.0 kDa, a membrane with a molecular weight cut off (MWCO) of around 0.5 kDa can be used. At this MWCO, most PCBs, PCDDs, PCDFs (0.2-0.5 kDa) and PAHs (0.2-0.3 kDa) pass through the membrane as components of the final permeate, while only a very limited amount of phospholipids and triglycerides is lost from the retentate.

The degree of pollutant removal depends not only on the MWCO and other physical attributes of the membrane, but also from the amount of solvent removed from the lipid concentrate. If a native extract containing 5% lipids in the solvent is concentrated to a 50:50 concentrate, close to 95% of the solvent is removed by use of the membrane. Even if the pollutants pass through the membrane at a slightly slower rate than the solvent, this procedure still provides a very efficient removal of pollutants from the lipid concentrate. If desired, the concentrate can also be diluted again and subsequently concentrated by the same or a similar membrane to reach even higher purity levels and lower levels of contaminants and pollutants.

Removal of the extraction solvents by membranes can allow for a significant reduction in the levels of free fatty acids (FFAs, ∼0.3 kDa). Removal of the extraction solvents by membranes can also allow for a significant reduction in the levels of free cholesterol (∼0.4 kDa). For example, the amount of FFAs can be reduced to less than about 1 wt.%, or less than about 0.5 wt.%, of the extracted composition. Also, the amount of free cholesterol can be reduced to less than about 1 wt.%, or less than about 0.5 wt.%, of the extracted composition. These reductions provide significantly improved product quality and purity by removing the FFAs, which can be unstable components with a propensity to oxidize other compounds in a mixture, and lessen a compositions resistance to spoilage. In certain embodiment, a second filtration with the same or a different MWCO membrane can be used to further reduce the FFA and/or free cholesterol content, if desired.

The product viscosity is also improved for various purposes by removing the high-melting cholesterol component. Removal of the free cholesterol results in less formation of significant amounts of or substantially all cholesterol oxides, which are known to be more atherogenic than cholesterol itself. The removal of lower molecular weight lipid species such as FFAs and cholesterol also provides more potent products with higher relative levels of the valuable marine omega-3 phospholipids. The reduction in FFAs also improves the smell and taste properties of the lipid concentrate. This reduction makes the product significantly more suitable as a food additive. The reduction of neutral lipid components such as FFA and cholesterol also increases the emulsifying properties of the lipid extract and hence improves its performance as an emulsifying agent in food matrices. The membrane filtration also allows for a significant reduction in the amount of ionic compounds in the final extract, e.g. salts, metal ions, and salts thereof, of which some will naturally occur in marine organisms.

### Phospholipid Compositions

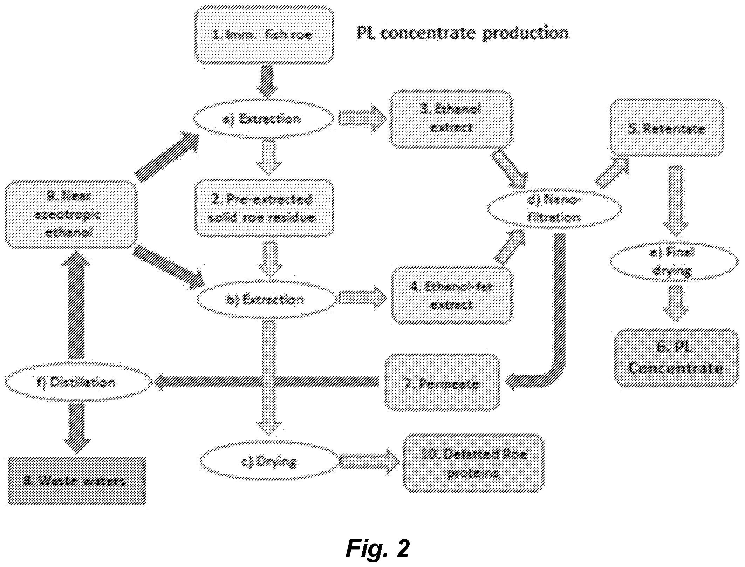

The invention thus relates to lipid compositions comprising a high content of DHA, which is preferably extracted from a natural source. Surprisingly, the inventors have found that stable, solid, phospholipid-rich lipid compositions with both a high phospholipid content and a high omega-3 fatty acid content, particularly enriched in DHA, can be efficiently prepared from fish and fish by-products, including immature fish roe, mature fish roe, milt, internal organs, and other parts of fish. See for example, **Figure 2****.** The high omega-3 fatty acid content of the extracted phospholipids can include particularly high levels of EPA (eicosapentaenoic acid (20:5 (n-3))) and DHA (docosahexaenoic acid (22:6 (n-3))).

As described herein, a PL concentrate can be extracted from a fish or fish by-product such as fish roe. The fish can be a cold-water pelagic fish. The PL concentrate can be extracted from fish roe. The fish roe can be immature fish roe or mature fish roe. In certain embodiments, the roe can be soft roe. As described herein, the extraction process can be carried out on fish processing by-products such as milt, fish gonad fractions, fish internal organs, tails, heads, skin, spines, and the like. As described herein, the extraction process can be carried out on any fish component, even whole fish, provided the tissues are processed to a sufficiently extractable form. As described herein, the product is a mixture of roes, milts, and internal organs. The lipid composition can be substantially stable to oxidation. The stability of a composition to oxidation can be measured by accelerated shelf life tests, with oxidation determined using standard indices such as the amount of non-oxidized fatty acids remaining, and the presence of thiobarbituric acid reactive substances (TBARS), and peroxide value (PV) of the composition.

The polar lipid extracted from fish roe described herein is known as a "concentrate" or a "PL concentrate". The PL concentrate can be a solid, or in other embodiments, a viscous oil. Concentrate from mature and immature herring roe can contain phospholipids at about 60-70% by weight, with almost no variation related to maturity in the phospholipid content and the omega-3 fatty acid content. The PL concentrate can contain about 30-65% by weight of the long chain omega-3 fatty acids EPA, DHA, and n3 DPA, typically esterified to phospholipids, predominately phosphatidylcholine, with a typical ratio of DHA:EPA of 2: 1 to about 4:1. As described herein, the DHA and EPA can be present in a ratio of about 1.5:1 DHA:EPA to about 3:1 DHA:EPA, for example, about 1.7:1 DHA:EPA, about 1.8:1 DHA:EPA, about 2.5:1 DHA:EPA, or about 2.9:1 DHA:EPA. The DHA to EPA ratio is at least 2:1.

The inventors have discovered that omega-3 phospholipids extracted from immature fish roe, a previously underutilized natural resource that is part of an existing fishery, have a desirable content of omega-3 fatty acids as described above, as well as having desirable physical properties that facilitate use for oral delivery and in nutritional supplements, dietary supplements, and food products. As described herein. the omega-3 phospholipids can be, for example, extracted from immature fish roe, mature fish roe, soft roe, milt, and internal organs. The invention is not limited to extraction of omega-3 phospholipids from any particular fish roe, whether mature or immature. However, in some embodiments, the immature fish roe is from herring, mackerel, menhaden, or salmon.

Extraction of omega-3 phospholipids may be accomplished by a variety of methods. In the process of the present invention, a polar solvent is used for the extraction. In some embodiments, the polar solvent is ethanol. In one embodiment, the omega-3 phospholipids are extracted by super critical fluid extraction, preferably with a polar entrainer such as ethanol. Extraction with a polar solvent yields a polar lipid fraction that is enriched for omega-3 phospholipids. The solvent is removed from the polar lipid fraction to provide a solid polar lipid composition that is enriched for omega-3 phospholipids. In one embodiment, extraction is by supercritical fluid extraction (SFE) using CO₂ as a solvent and ethanol as a polar entrainer. Some useful techniques for SFE are described by U.S. Patent Publication No. 2011/0160161 (Sampalis et al.).

The lipid compositions described herein are excellent source of DHA and EPA. The solid phospholipid-rich lipid compositions can also be pliable, and have a light amber or bright yellow color. The solid phospholipid-rich lipid compositions are stable for extended periods of time, and for periods of time longer than corresponding fatty acids without phospholipid moieties, due to the antioxidant properties of the phospholipid moieties. The phospholipid compositions are highly suitable for formulation or incorporation into oral delivery vehicles, dietary supplements, nutritional supplements and food products. Described herein are also processes for incorporating or formulating the lipid compositions described herein into desired products.

The methods of the present invention provide various phospholipid compositions that have advantageous amounts and ratios of fatty acid esters. A phospholipid composition such as MOPL can include a combination of a triglyceride (e.g., a fish oil) and an extracted polar lipid rich in phospholipids (e.g., a PL concentrate). The combination can be present, for example, in a ratio ranging from about 1:10 to about 10:1. The phospholipids can have a structure such as Formula I: 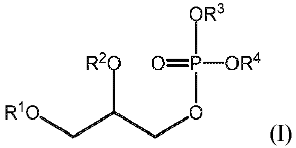 wherein R¹ is H or a fatty acid moiety, R² is H or a fatty acid moiety, each R³ is independently H, or a choline, an ethanolamine, an inositol, a glycerol (as in phosphatidylglycerol or diphosphatidic acid), or a serine moiety, and R⁴ is a negative charge, H, or a cation such as an alkali metal cation (for example, Li⁺, Na⁺, or K⁺). In some embodiments, the phospholipid can have DHA and/or EPA moieties as at least 1% of the R¹, R², and R³ groups. The phospholipids can have an overall concentration of OH groups on structures of Formula I in the range of about 2.5% to about 80%, about 5% to about 70%, about 10% to about 60%, or about 20% to about 50%.

In some embodiments, the omega-3 fatty acids moieties include EPA, DHA, n-3 DPA, and/or α-linolenic acid (ALA). In various embodiments, the composition is substantially free of organic solvents and volatile organic compounds such as short chain fatty acids, short chain aldehydes and short chain ketones (e.g., where short chain refers to C₁-C₆ alkyl).

In some embodiments, the phospholipid has at least 5%, or at least 10%, by weight, of a combination of EPA and DHA moieties esterified to the glycerol backbone. In various embodiments, the phospholipid has at least 20% of a combination of EPA and DHA moieties esterified to the glycerol backbone. The phospholipid can also have at least 30% of a combination of EPA and DHA moieties esterified to the glycerol backbone. In yet other embodiments, the phospholipid contains about 5%, about 10%, about 20%, about 30%, about 40%, or about 50% EPA/DHA moieties attached to position 1 and/or position 2 to the glycerol backbone. The remainder of the groups can be, for example, other fatty acids described herein or hydroxyl groups. In some embodiments, the phospholipid has a ratio of DHA:EPA ranging from about 1:1 to about 3:1, or about 1:1 to about 4:1. In other embodiments, the composition has a ratio of DHA:EPA ranging from about 2:1 to about 3: 1 or about 2:1 to about 4:1. In other embodiments, fractionation and purification techniques can be used to produce a composition with a ratio of DHA:EPA of 10:1 or greater.

In some embodiments, glycerol oxygen atoms that are not phosphorylated in the composition can be about 30% to about 99% acylated, or about 40% to about 96% acylated. In other embodiments, the composition is acylated in a range from 50% to 78%. In yet other embodiments, the phospholipid glycerol oxygen atoms are acylated to a degree of about 50% to about 90%, about 55% to about 85%, about 60% to about 80%, about 40% to about 80%, or about 55% to about 75%.

In some embodiments, the phospholipid extracted from eggs such as fish roe can be a solid, such as a PL concentrate and/or a triglyceride concentrate. In other embodiments, the phospholipid extracted from eggs such as fish roe can be an oil, such as when the extraction process is modified (e.g., by MWCO of the nanofiltration) to obtain only certain compounds or groups of compounds, for example, a PL oil or a or a triglyceride oil. The composition can be a marine lipid composition formulated into an animal feed, a food product, a food supplement, a drug delivery system, or a drug.

In some embodiments, the composition can include a useful nutritional amount of cholesterol. Some compositions, such as a MOPL 50 product, can include about 3-10 g, about 4-8 g, about 4-6 g, about 6-8 g, about 5 g or 7 g, of cholesterol per 100 g sample. Other compositions, such as a MOPL 30 product, can include about 2-4 g, or about 3 g, of cholesterol per 100 g sample. Additionally, the membrane filtration process can provide phospholipid products with extremely low amounts of cholesterol and cholesterol esters, such as less than about 4 wt.%, less than about 3 wt.%, less than about 2 wt.%, or less than about 1 wt.%.

The compositions can also include an extremely low water content. A low water content can increase the stability and shelf life of the compositions, thereby providing a high purity product. In some embodiments, the phospholipid composition will include less than about 2 wt.% water, less than about 1 wt.% water, less than about 0.75 wt.% water, less than about 0.5 wt.% water, less than about 0.4 wt.% water, less than about 0.25 wt.% water, less than about 0.1 wt.% water, less than about 0.05 wt.% water, or less than about 0.01 wt.% water.

High levels of free fatty acids contribute to rancidity, off-taste, and increased oxidizability of food products and supplements. The phospholipid compositions obtainable by the processes described herein can contain very low or no free fatty acid content, due to the low naturally occurring levels in herring roe and the gentle and mild extraction and purification steps employed. For example, the compositions can include less than about 5 wt.%, less than about 4 wt.%, less than about 4 wt.%, less than about 2 wt.%, or less than about 1 wt.% of free fatty acids, due to the enhanced purification of the products by use of membrane filtration. The phospholipid compositions obtained from fish roe typically contain much lower amount of free fatty acids compared to products extracted from other sources such as krill, the extracts from which can include high amounts of free fatty acids (e.g., greater than about 3 wt.%, and as high as about 20 wt.%). The phospholipid compositions described herein can also include specific beneficial amounts of phospholipids and lysophospholipds not found in other extracts and compositions. For example, the phospholipid compositions described herein can include a lysophospholipid (e.g., a 1-acyl; 2-lyso; 1-lyso; 2-acyl; or di-lyso (phosphatidic acid); an alkylacyl PC and/or PE; an alkenylacyl PC and/or PE; and/or other phospholipids. Such components are often ignored, such as phosphatidyl glycerol (PG) and diphosphatidylglycerol (DPG or cardiolipin), all of which are important bioactive lipids often ignored or not found in useful quantities in extractions from fish products or by-products. In other embodiments, the extracts can have a reduced amount of lysophospholipids due to the milder extraction methods, including less than about 6 mol% or less than about 4 mol% of total phospholipids. The extracts can also include astaxanthin (e.g., at about 1-1000 ppm, about 5-30 ppm, about 5-20 ppm, or about 5-10 ppm).

The methods of efficiently extracting phospholipids from fish compositions such as fish roe provide a novel composition of solid phospholipids. While other phospholipids have been extracts from various fish compositions, the inventors have identified a unique set of phospholipids that can provide beneficial qualities to therapies and food products, where certain components are found in very high quantities, and other species are found in very low quantities or they are absent. Species-specific naturally low levels of free fatty acids combined with a gentle extraction technique have enabled the inventors to obtain a novel and advantageous phospholipid composition as described herein.

Thus, in some embodiments, with respect to the total mass of the PL concentrate, the PL concentrate can include at least about 50 wt.%, at least about 60 wt.%, at least about 65 wt.%, at least about 70 wt.%, or at least about 75 wt.% of phospholipids. With respect to the total mass of phospholipids in the PL concentrate, the PL concentrate can include at least about 75 wt.%, at least about 80 wt.%, at least about 81 wt.%, or at least about 83 wt.% of phosphatidylcholine. With respect to the total mass of phospholipids in the PL concentrate, the PL concentrate can include less than about 5 wt.%, less than about 4 wt.%, less than about 3 wt.%, less than about 2.5 wt.% of phosphatidylinositol, or substantially no phosphatidylinositol (i.e., no detectable amount). With respect to the total mass of phospholipids in the PL concentrate, the PL concentrate can include about 5-10 wt.%, or about 6-9 wt.% of phosphatidylethanolamine. In other embodiments, the PL concentrate can include less than about 10 wt.%, less than about 9 wt.%, or less than about 8 wt.% of phosphatidylethanolamine. With respect to the total mass of phospholipids in the PL concentrate, the ratio of phosphatidylcholine to phosphatidylethanolamine can be from about 8:1 to about 17:1.

The PL concentrate can also have less than about 2 wt.%, less than about 1 wt.%, or no detectable phosphatidylserine, and less than about 2 wt.%, less than about 1 wt.%, or no detectable sphingomyelin.

To extract the phospholipids from the fish, fish by-products, or fish roe, any suitable and effective food grade polar solvent that is polar based on dielectric constant will suffice to effect a good extraction of the polar phospholipids. In some embodiments, the polar solvent is, for example, methanol, ethanol, butanol, or a combination thereof. In other embodiments, the extraction is a supercritical fluid extraction with a polar entrainer and/or a supercritical fluid solvent such as carbon dioxide.

The lipid compositions described herein can also include proteins or amino acids, such a protein from fish, from a fish by-product, or from fish roe, as described herein. The extracted solid lipid composition will typically have little (less than about 4 wt.%, less than about 3 wt.%, or less than about 0.5 wt.%) or no protein component because the proteins are poorly dissolved during the extraction process, and are typically filtered off. However, certain protein components or amino acids can be added to an emulsion prepared from the extracted phospholipid solid to provide a suitable and effective delivery vehicle for the protein or amino acids.

### Methods of Extraction

A phospholipid composition can be extracted from fish composition, particularly fish roe. The fish component can be frozen and then ground. The un-dried material can then be extracted with a suitable food-grade solvent, typically with stirring at ambient temperatures (∼22 °C). It can be advantageous to break any egg shells to improve the efficiency of the extraction process (e.g., by using a mixer or blender). The solids of the mixture can then be separated, for example by decanting or the like. It can be advantageous to re-extract the solids at a higher concentration of the food-grade solvent, followed by separation of the solids from the extract. The extracts can then be optionally combined. The solvent can then be removed by any suitable and effective method. It can be advantageous to provide heat to enhance the evaporation, although the composition is typically heated to only 60 °C, 55 °C or less.

When the extract reaches approximately 20 wt.%, 15 wt.%, 10 wt.%, 5 wt.%, 2 wt.%, or 1 wt.% lipids, non-soluble solids can be removed by filtration. The lipid content of the extracts can be determined by evaporation of volatiles from a sample using a rotary evaporator under reduced pressure, or by infrared measurements. The solvent removal can be continued until the extract reaches about 50 wt.% to about 60 wt.% lipids, at which point the extract can be centrifuged to remove insoluble particles. The remaining solvent is then removed from the extract by evaporation under reduced pressure to provide a solid with a light amber color and a high content of phospholipids.

A phospholipid composition with an even higher content of phospholipids can be obtained by increasing the polarity of the extraction solvent. For example, instead of using 96% ethanol, a solvent with a higher percentage of water can be used, in order to extract a higher percentage of polar phospholipids, and thereby reducing the extraction of less polar components (e.g., certain fats and cholesterol).

An extraction process can be further described as follows. Fresh or frozen immature fish roe can be combined with 95% or absolute ethanol and mixed in a high power commercial mixer. The resulting combination can then be filtered, for example, using Milk-filters (12-15 µm pores) (M-filters) to remove un-dissolved cell components and proteinaceous materials. It may also be advantageous to employ a filtration technique that filters smaller particles, such as particles as small as about 1 µm in size, using a filter with a smaller pore matrix. Any filter that suitably removes the solid particles and undissolved material greater than about 1 µm in size may be employed.

The resulting opaque ethanolic filtrate can then be filtered with a 15 µm paper filter under reduced pressure to provide a solid residue (retentate) and a second filtrate. The retentate can be reintroduced to the mixer together with other portion of 95% ethanol for further mixing to provide a suspension. The suspension can then be filtered with an M-filter under reduced pressure to provide an opaque ethanolic filtrate. The filtrate can be filtered again with a 15 µm paper filter under reduced pressure to provide a solid residue (retentate) and a third filtrate.

The ethanol of the second and third filtrates can be removed by rotary evaporation at reduced pressure (e.g., less than 200 mBar), optionally in combination with heating (e.g., anywhere from about 30 °C to about 65 °C). A light yellow or near white solid material results.

Ethanol can be added to the residue followed by continued evaporation to remove any remaining amounts of water in the product. The ethanol addition step can be then repeated one or more times, optionally with added heat, until the product is completely solid. The yield of isolated phospholipids from fresh immature herring roe can be about 3-6%, with significantly reduced fish odor.

As described above, the process results in a phospholipid composition that has very low amounts of free fatty acids, typically less than about 3-4 wt.%, for example, less than about 2 wt.% or less than about 1 wt.%. The process also provides a composition that has a very low sodium content, for example, less than about 4 mg/g, less than about 2 mg/g, less than about 1 mg/g, less than about 0.5 mg/g, or less than about 0.1 mg/g of sodium. The mild process results in less hydrolysis compared to known extraction processes. Accordingly, the products can have lower relative amounts of free fatty acids, diacylglycerides, monoacylglycerides, and lysophospholipids. In other embodiments, the roe can be processed to have increased amounts of lysophospholipids.

The secondary breakdown products are typically the result of oxidation and degradation of components such as amino acids, including essential amino acids such as lysine, the dehydration of sugars, including sugars bound to proteins, lipids, or phospholipids. These degradations reduce the biological and nutritional value of the extracted products.

The extraction and filtration process thus provides a purified solid containing a combination of phospholipids with a very low amount of salts and free fatty acids. The resulting product can have less than about 5 wt.% or less than about 2 wt.% of free fatty acids. Thus, in various embodiments, the resulting product can have less than about 4 wt.% free fatty acids, less than about 3 wt.% free fatty acids, less than about 2 wt.% free fatty acids, less than about 1.5 wt.% free fatty acids, less than about 1 wt.% free fatty acids, less than about 0.5 wt.% free fatty acids, less than about 0.25 wt.% free fatty acids, less than about 0.2 wt.% free fatty acids, or less than about 0.1 wt.% of free fatty acids. The mild process also reduces the amount of lysophosphatidic acid and lysophosphatidic acid esters by similar degrees as described for free fatty acids.

In one embodiment, the free fatty acid content of the phospholipid concentrate can be significantly reduced (e.g., by about 20%, by about 25%, by about 30%, by about 50%, by about 75%, by about 80%, by about 90%, or by about 95%) by dissolving the phospholipid in an aqueous solution and contacting the aqueous solution to a wetted polyimide membrane (e.g., a Matrimid 5218 membrane) having an organic solvent opposite the aqueous phospholipid solution, with circulation of the fluids. The molecular weight cutoff (MWCO) of the membrane can be, for example, about 0.5 kDa, about 1 kDa, about 2.5 kDa, about 5 kDa, or about 35 kDa. See for example, Examples 3 and 4 of U.S. Patent Publication No. 2012/0077255 (Miranda et al.).

### Filtration Membranes

Membranes can be used to reduce the impurities of a phospholipid extract, as well as to increase the proportion of polar phospholipids compared to neutral lipids such as cholesterol. Suitable membranes for removing un-dissolved material and neutral components of wet roe include membranes made of a hydrophobic polymeric material. In one embodiment, polyimide membranes can be used to remove undesired material from the phospholipid composition. Examples of various suitable polymers include, but not limited to, Lenzing P84 and Matrimid 5218 membranes. The membranes can be reinforced by a porous supporting layer, such as a non-woven polyester baking paper.

The membranes can be porous in the low ultrafiltration or nanofiltration range. Hydrophobic membrane can also be used to separate, or used as a barrier between, hydrolyzed and un-hydrolyzed lipids. In some embodiments, the membranes can present a rejection greater than about 50%, greater than about 70%, or greater than about 95%, for diglyceride molecules.

Filtrations can be carried out as batch processes or as semi-continuous processes. The membranes used in filtrations described herein can be configured in accordance with any of the designs known to those skilled in the art, such as spiral wound, plate and frame, shell and tube, and derivative designs thereof. The membranes may also be of cylindrical or planar geometry.

Microfiltration (MF) and ultrafiltration (UF) techniques can be used for the concentration of the broken fish roe eggs and/or the dissolved phospholipids. A proper choice of membrane can be carried out according to the characteristics of the mixture to be filtered. Ceramic membranes can be used to take advantage of their high chemical and thermal stability. Cross-flow filtration modules that contain an inorganic tubular membrane, e.g. membranes made for instance of titanium or zirconium, can be used to filter the mixtures or suspensions of phospholipids. As described herein, one inorganic tubular membrane that can be used includes a cut off in the micro (0.1-10 µm) or ultrafiltration range (10³-10⁶ Da).

In one embodiment, ultrafiltration can be used to clarify the extracted phospholipids after extraction from fish roe. Nanofiltration of the clarified UF permeate can then be used to remove monovalent ions (e.g., salts, cations, and anions), small molecules (e.g., less than 200 Da), and water. For example, by using nanofiltration, at least about 60%, at least about 70%, or at least about 80% of the water in a sample can be removed, at a very low energy cost. Similar amounts of sodium chloride and other salts can be removed from the phospholipid composition using nanofiltration.

Suitable membranes can be formed from a polymeric or ceramic material that allows phospholipid oils to pass through, while retaining larger molecules. The membrane can be made of polymeric materials suitable for fabricating microfiltration, ultrafiltration, nanofiltration or reverse osmosis membranes, including, but not limited to polyethylene, polypropylene, polytetrafluoroethylene (PTFE), polyvinylidene difluoride (PVDF), polyethersulfone, polyacrylonitrile, polyamide, polyimides including polyimides crosslinked using mono-, di-, tri- or polyamine species, cellulose acetate, and mixtures thereof. The membranes can be made by various technique known in art, including sintering, stretching, track etching, template leaching, interfacial polymerization or phase inversion. In one embodiment, a suitable membrane is prepared from one or several inorganic materials such as, for example, aluminum oxide, silicon carbide, silicon oxide, zirconium oxide, titanium oxide, or zeolites, using techniques such as but not limited to sintering, leaching or sol-gel processes.

The membrane filtration process can be microfiltration, ultrafiltration, or nanofiltration, or a combination thereof, performed in any order. The membranes can be tubular ceramic membranes, with cut-off smaller than the particle size of the undesired larger molecules, for example, between 0.01 and 50 µm. In one embodiment, a tubular membrane having a pore size about 0.10 to about 0.50 µm is employed.

While nanofiltration membranes have existed for about 30 years, the focus of nanofiltration membrane technology has been the filtration and purification of water and the recovery of food contained in water. Food recovery has thus far been a very limited application and is relatively expensive due to fouling of the membrane surface, which drastically reduces productivity and cost/performance of the membrane. Main fouling agents include biological organisms responsible for what is defined as biofouling, and organic molecules, which have a very low solubility in water and tend to precipitate on the membrane once they concentrate on its surface.

When solvents such as ethanol and methanol are used, the biological organism are generally eliminated or prevented from growing while organic molecules become much more soluble, drastically reducing the fouling problems. The conditions in which the membranes are employed during the PLs recovery step (e.g., a content of ethanol ranging from 95 to 80 wt.%) have been found to be suitable for nanofiltration membrane PL recovery techniques. However, the number of commercial membranes developed to be stable with solvents such as ethanol is very limited. Therefore, it is challenging to find a suitable membrane that can be stable in ethanol and is able to perform well within the range of the nanofiltration pore size (e.g., below 2 nm of diameter). Even polymeric membranes regularly employed in food applications, such as wine and beer, demonstrated great instability and poor performances when used to recover PLs products solved into an extraction liquid containing above 70 wt% of ethanol.

After a screening of over ten different types of membranes, most were found to provide poor results or were not stable with high amounts of ethanol, including certain ceramic membranes, piperazine-based membranes, and zeolite-based membranes, regardless of MWCO values. Many polymeric membranes absorbed solvents such as ethanol and became unstable or simply ceased filtering. However, it was discovered that a polyamide membrane with a MWCO of 300 Da provided suitable results and could be successfully applied with the conditions required for the extraction process. Additionally, it was discovered that a ceramic membrane could be tailored by coating with nanoparticles of titanium dioxide to provide a MWCO in the range of 400-200 Da, which provided suitable results and could be successfully applied within the conditions required for the extraction process. Use of these membranes allowed for the production of a high quality purified phospholipid product, even though they were initially developed for use with liquids containing water.

The following Examples are intended to illustrate the above invention and should not be construed as to narrow its scope.

### Comparative Example 1. Standard Extraction of Phospholipids

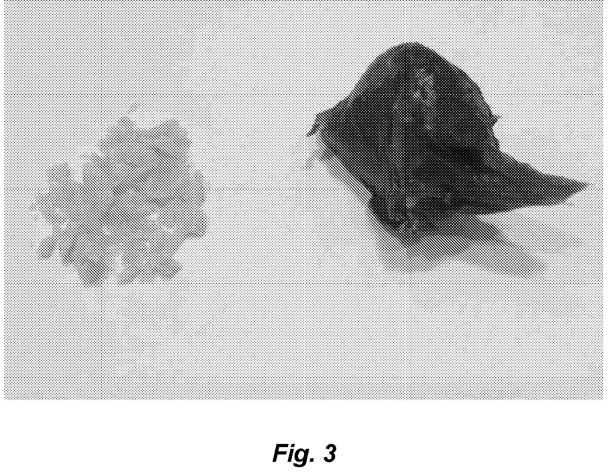

**Process 1**. Frozen, immature herring roe was ground and vacuum dried. The dried material was extracted with 96% ethanol at a ratio of 10 liters of ethanol per kg of dried roe in a stirred reactor at ambient temperature for 30 minutes. The stirring inside the reactor was combined with an external loop via a high shear mixer to break egg shells during the extraction. The solids and liquid extract were separated with a decanter. The solids were re-extracted with 96% ethanol, approximately 6 liters of ethanol per kg of dry weight eggs, for another 30 minutes. The solids and liquids were again separated in a decanter. The combined liquids (extracts) had a lipid content of around 1-4 wt.%, as determined by evaporation of volatiles from a sample using a rotary evaporator under reduced pressure. The lipid fraction was then concentrated by ethanol evaporation until reaching approximately 12% in a falling film evaporator at a temperature of less than 50 °C. The lipid fraction was further concentrated by ethanol removal under reduced pressure in a stirred reactor. At a lipid content of around 20%, the ethanol solution was filtered to remove non-soluble solids. The concentration then continued until reaching approximately the 55% level at a temperature of less than 55 °C. The 55% extract can then optionally be centrifuged to remove insoluble particles. The composition was then subjected to a final evaporation in a mixer under reduced pressure. Pure ethanol can optionally be added and evaporated to assist the evaporation of final amounts of water to below 1%. The resulting product was a solid with an amber color, as shown on the right in **Figure 3****,** and a high content of phospholipids.

**Process 2.** Fresh herring roe (2202 g) was dried under reduced pressure at a temperature not exceeding 80 °C to yield 556 g of dried roe with a dry matter content of 96%. The dried roe was suspended in 5560 g of 96% ethanol and stirred for 30 minutes at 25-30 °C. The solution in the extraction vessel was circulated via an external loop and a high sheer mixer during extraction to maximize the extraction efficiency. The solids were subsequently separated from the ethanol extract by centrifugation and extracted again with 3336 g of 96% ethanol under the same processing conditions. Ethanol and residual water was removed stepwise from the combined extract under reduced pressure at a temperature not exceeding 45 °C. Two filtrations, with nominal pore sizes of 5 µm and 0,2 µm respectively, were performed during the evaporation process. The process yielded 53 g of a brown solid with a total phospholipid content of 67 g / 100g. Residual ethanol content was below 2%.

### Comparative Example 2. Extraction of Phospholipids

An improved process for extracting phospholipids from fish roe was developed and carried out as described below. The extraction was carried out as illustrated in **Figure 2****,** where the numbered boxes represent the materials and the lettered ovals represent the process steps, as follows.
1. Immature fish roe from spring spawning herring (SSH).
2. Resulting pre-extracted solid roe residue.
3. The ethanol-fat solution extracted from the immature fish roe containing material soluble in ethanol and water present in the fish roe starting material; after one extraction.
4. The ethanol-fat solution resulting from the extraction of the material of Box 2, containing material soluble in ethanol and water.
5. Retentate of the nanofiltration of materials from Boxes 3 and 4; a composition of molecules with molecular weights greater than 500 Daltons.
6. Phospholipid concentrate (PL concentrate): the oil product of the process.
7. Permeate: the solution containing solvents and other molecules with molecular weights less than 500 Dalton that permeated the membrane.
8. Waste waters: the water composition that represents the non-distillable fraction of the Permeate of Box 7.
9. Near azeotropic ethanol: the distillable fraction of the Permeate of Box 7.
10. Defatted roe protein: the dried protein fraction of the immature fish roe.

The process was carried out as follows.
a) Extraction: the eggs were contacted with near azeotropic (93% or 95%) ethanol and were thoroughly mixed to extract lipophilic materials, fats, and oils contained in the roe. After the extraction the solid residue was separated from the liquid fraction by means of filtration or centrifugation.
b) Extraction: the material of Box 2 was extracted using a process similar to the extraction of step a).
c) Drying: the extracted solid residue was dried under reduced pressure at moderate to low temperature (optional step).
d) Nanofiltration: the liquid extracts were pressed against a membrane that is able to separate the liquid extracts in two fractions: 1) the permeate that contains most of the solvent and also molecules having molecular weights lower than about 500 Daltons (or a different molecular weight cutoff, depending on the nanofiltration membrane used, as described herein); these materials include mineral salts, free fatty acids, carbohydrates, free cholesterol, environmental pollutants, and the like; and 2) the retentate, a lipid fraction highly enriched with phospholipids (PLs), triglycerides (TGs), and molecules having a molecular weight greater than about 500 Daltons (or a different molecular weight cutoff, depending on the nanofiltration membrane used, as described herein).
e) Final drying: the retentate undergoes a final concentration step to remove residual solvent that was not removed via the nanofiltration in step d).
f) Distillation: the permeate was distilled to separate a volatile fraction composed of near azeotropic ethanol and a non-volatile fraction composed of water and any contaminants contained in the permeate.

The process can be further described as follows. Immature fish roe from spring spawning herring (SSH) was thawed in a refrigerator overnight. Ethanol (denatured with 5% water; (EtOH95)) was used for the extraction. An OBH Nordica Frutti™ steel blender was used for mixing (∼1200 RPM). Milk filters were used for filtration steps (quantitative filter paper, 454 (12-15 µm)).

Immature fish roe (247 g) was combined in a blender with EtOH95 (540 g) and the combination was mixed at full speed for about 5 minutes to create a suspension. The suspension was then filtered with a milk filter under reduced (back end) pressure to provide an opaque ethanolic filtrate. The filtrate was filtered once again with a 15 µm pore cellulose filter paper (VWR® filter paper) under reduced pressure to provide about 233 g of solid residue (retentate; Box 2) and 440 g of an extract (Box 3).

The retentate was introduced again in the mixer together with EtOH95 (500 g) and was mixed for about 5 minutes to provide a suspension. The suspension was then filtered with a milk filter under reduced pressure to provide a translucent ethanolic filtrate. The filtrate was filtered again with a 15 µm pore filter paper under reduced pressure to provide about 210 g of solid residue (retentate; Box 2) and about 491 g of an extract (Box 4).

A portion of the first extract (Box 3; 428 g) was reduced to 79 g in a rotary evaporator at 175 mBar and 60 °C. A portion of the second extract (Box 4; 480 g) was then added and evaporation was continued to until a whitish nearly solid material formed. In an optional step, ethanol (100 mL) was added to the residue and evaporation was continued to remove any remaining amounts of water in the product, which also reduced foaming of the resulting concentrate. The ethanol addition step was then repeated twice and a full vacuum was applied at 60 °C until the internal pressure of the vessel lowered to 19 mBar and the product was completely solid.

Alternatively, the first or 'principle' extract may be membrane filtered to provide a concentrated retentate. For example, the first extract can be concentrated through nanofiltration with cross-flow technology, employing a ceramic membrane which allows one to obtain a permeate fraction where the solvent, mineral salts, and other contaminants with molecular weight lower than, for example, about 500 Daltons, are accumulated; and a retentate where the PLs and the TAG fraction are concentrated until at least about 80% of the starting mass (the combination of water, solvent, and dry mass) is removed from the starting feed material. In some procedures, at least 85% or at least 90% of the starting mass is removed from the starting feed material. The second extract was then added to the equipment and joined with the retentate while continuing the filtration. When the retentate reaches a level of about 40% dry matter, an additional 150 g of absolute ethanol (e.g., about 25-30% of the initial ethanol amount) can optionally be added to the retentate. The nanofiltration can proceeded until the retentate is reduced to a mass of approximately 20g (about 8-10 wt.% of the initial roe mass). The retentate can then be introduced to a rotary evaporator to complete the solvent removal from the product under reduce pressure at a temperature slightly elevated above room temperature (e.g., 30-40 °C, or up to about 60 °C).

A total of 8.9 g of a light yellow product was produced. The average dry matter contained in the extracts of Box 3 and Box 4 after joining was about 1%. The calculated yield from the starting material was 3.7%. The fishy smell of the roe starting material was significantly reduced or absent in the final product.

The process described in this example provided an improved product compared to the process described in Example 1. Employing the process of this example resulted in a product having clear increases in the proportion stable phospholipids compared to the process of Example 1, and also resulted in a product having dramatically increased (>10%) amounts of phospholipids and triglycerides, compared to the process described in Example 1.

### Comparative Example 3. Analysis of Phospholipid Composition Content

Extracted phospholipid compositions were in the form of a solid PL concentrate, which were analyzed for phospholipid mass balance and fatty acid content. The phospholipid compositions can be about 50% to about 95% phospholipids by weight. With further purification, the compositions can be about 90 wt.% to about 100 wt.% phospholipids. As can be observed from Table 3-1 below, phosphatidylcholine forms a large percentage of the phospholipid composition (e.g., a PL concentrate or a PL oil), for example, at least about 40 wt.%, at least about 50 wt.%, or at least about 54 wt.%. The composition also includes at least about 5 wt.%, or at least about 6 wt.% phosphatidylethanolamine. **Table 3-1** uses standard abbreviations including APE for acyl phosphatidylethanolamine.

**Table 3-1. Typical PL species as quantified by ¹H NMR (correlated to mass %), as a comparison of the relative distribution of the various PL species for the lipids extracted from wet roe (Example 2) versus dried roe (Example 1).**

| **PL species** | **Example 2 Process** | **Example 1 Process 1** |
|---|---|---|
| PC | 80.9 | 81.5 |
| 1-LPC | 0.4 | 0.6 |
| 2-LPC | 2.6 | 3.0 |
| PI | 2.5 | 2.6 |
| PE | 9.1 | 6.9 |
| LPE | 0.6 | 0.5 |
| APE | 0,.3 | 0.5 |
| PA | | 0.5 |
| Other | 3.5 | 4.0 |
| Sum PL | 100.0 | 100.0 |
| Lyso PC+PE, % of total PC+PE | 3.9 | 4.6 |

The product of the Example 2 process was obtained more efficiently (i.e., in less time and with less cost) than the product of the Example 1 process. Additionally, the products of the Example 2 process were significantly lighter in color, had an improved flavor, had less (or no) fish odor, fewer phospholipids and triglycerides were degraded, and the product had fewer other degradation products than the composition obtained by the Example 1 process.

For example, approximately 30-40% of the cost of obtaining the product from the Example 1 process can be attributed to the drying of the roe, whereas those costs can be completely eliminated by extracting the wet roe directly, as the in the Example 2 process. Additionally, small ions and molecules were efficiently removed from the retentate. The ash content was reduced by about 75%. Furthermore, analysis of the Example 2 products showed that they contain only 2.5% the amount of lead ions compared to the amount in the initial material, and bromide ions were found to be only 2.1% of the amount found in the initial material.

Additionally, if desired, the amount of lysophospholipids can be increased or decreased by changing the MWCO of the membrane used for filtration and/or by processing the initial roe (e.g., by mincing, blending, sonicating, treating with caustic agents, or the like). In some embodiments, the approximate mass balance of the composition can be as shown in **Table 3-2** below.

**Table 3-2. Approximate PL Concentrate Total Mass Balance.**

| **Component** | **Example 1 (Wt. %)** | **Example 2 (expected) (Wt. %)** |
|---|---|---|
| Phospholipids | 65 | 75 |
| Triglycerides | 14 | 16 |
| Free fatty acids | 6 | 2 |
| Cholesterol | 6 | 2 |
| Sterol esters | 1 | 1 |
| Ash content | 4 | 1 |
| Protein | 3 | 3 |
| Other | 1 | |
| Sum | 100 | 100 |

The phospholipid compositions have demonstrated excellent oxidative stability (with no addition of antioxidants) and they do not generate belching with fish aromas that is often associated with orally delivered conventional 18:12 fish oil (a common consumer complaint). The stability is not only superior to 18:12 fish oil but is also significantly superior to krill oil, which also has an inherently fishy odor that is much less noticeable in the phospholipid compositions described herein. Trace metals are not reported to concentrate in the roe, and there are no food chain or ecosystem concerns because the roe is a byproduct of existing fishery operations.

The phospholipid compositions can include a very low amount of free fatty acids (less than about 6.5 wt.%, less than about 5.5 wt.%, or less than about 1 wt.%), while krill oil can have as high as 21-22% of its EPA and DHA in free fatty acid form, which negatively affects bioavailability and/or leads to stability, oxidation, and sensorial problems.

Other phospholipid compositions, such as those described by U.S. Patent No. 7,759,325 (Dupont), provide compositions that include lecithin at 10-50 wt.%, typically about 20 wt.%, of the composition. Of the total phospholipids, such compositions include 10-75% of phosphatidylcholine, 10-30% phosphatidyl inositol, 5-30% phosphatidylethanolamine, 5-20% phosphatidylserine, and 5-30% sphingomyelin, by weight. In various embodiments, the phospholipid compositions described herein do not include phosphatidylserine or sphingomyelin, or they are included in only very low amounts (e.g., less than about 4%, less than about 2%, or less than about 1%), and they include total phospholipid amounts of greater than 50% by weight.

Further analyses of various phospholipid concentrates provided the data of Table 3-3.

**Table 3-3. Approximate Fatty Acid Content in Herring Roe Phospholipid Concentrates.**

| Fatty acid(s) | In the phospholipids (approx. 75% of concentrate) |
|---|---|
| | Relative fatty acid composition (A%) |
| EPA | 13-17 |
| DHA | 38-44 |
| EPA+DHA | 50-60 |
| Total n-3 | 53-65 |
| DHA:EPA | 2.0-3.5 |

Thus, 1 g of concentrate can contain approximately 750 mg of phospholipids. Another approximately 160 mg can be accounted for by the triglycerides. Some variations from the actual content are a result of the analytical methods employed. Free fatty acid and cholesterol content, due to the membrane separation, will be reduced to approximately 2% each, or less (e.g., less than about 1% of one, the other, or both). Ash content and sterol esters will be less than about 2% each, or 1% or less, each, whereas ash content in the standard (Example 1) processes is at least 2%, typically 2-4%.

A detailed analysis of fatty acids in a phospholipid extract (concentrate) provided the data shown in **Table 3-4** below.

**Table 3-4. Analysis of Fatty Acid Content.**

| **Fatty acid** | **Name** | **A%** |
|---|---|---|
| 14:0 | Myristic | 3.5 |
| 15:0 | pentadecanoic | 0.5 |
| 15:1 | pentadecenoic | 0.1 |
| 16:0 | Palmitic | 19.2 |
| 16:1 | palmitoleic | 5.6 |
| 16:2 | hexadecadienoic | 0.2 |
| 17:0 | heptadecanoic | 0.2 |
| 17:1 | heptadecaenoic | 0.3 |
| 16:4 | hexadecatetraenoic | 0.1 |
| 18:0 | Stearic | 1.4 |
| 18:1 n-9 | Oleic | 8.4 |
| 18:1 n-7 | cis-vaccenic | 3.2 |
| 18:2 n-6 | Linoleic | 1.0 |
| 18:3 n-6 | γ-linolenic | 0.1 |
| 18:3 n-3 | α-linolenic | 0.7 |
| 18:4 n-3 | Stearidonic | 1.2 |
| 20:1 | eicosenoic | 1.8 |
| 20:2 n-6 | eicosadienoic (n6) (dihomolinoleic) | 0.1 |
| 20:4 n-6 | Arachidonic | 0.5 |
| 20:3 n-3 | eicosatrienoic (n3) (dihomolinolenic) | 0.1 |
| 20:4 n-3 | eicosatetraenoic (n3) | 0.6 |
| 20:5 n-3 | EPA | 12.8 |
| 22:1 n-11 | cetoleic | 0.5 |
| 22:1 n-9 | erucic | 0.1 |
| 21:5 n-3 | heneicosapentaenoic | 0.2 |
| 22:4 n-6 | docosatetraenoic (n6) (adrenic) | 0.2 |
| 22:5 n-6 | DPA n-6 | 0.2 |
| 22:5 n-3 | DPA n-3 | 1.0 |
| 22:6 n-3 | DHA | 31.3 |
| 24:1 | tetracosenoic | 0.6 |
| minor comp | minor sum | 4.3 |
| Sum fatty acids | | 100.0 |
| | | |
| Total saturates | | 24.8 |
| Total monoenes | | 20.6 |
| Total n-3 | | 47.7 |
| Total n-6 | | 2.1 |
| n-3/n-6 | | 22.7 |

### Comparative example 4. Egg Yolk Extraction Procedure

Fresh egg yolks of 10 chicken eggs provided about 188.7 g of red liquid. The yolks were contacted directly with 2053 g of ethanol containing 8 wt.% of water at room temperature to form a suspension. The suspension was mixed with a magnetic stirring bar for about 15 minutes. The resulting suspension was then centrifuged at 25 °C for 11 minutes at 6000 times gravity force (g). About 2114 g of an intense yellow liquid was obtained which was denominated "Liquid Fraction 1". The decanted solid fraction was composed mostly of proteins and residual solvent. The solid fraction was contacted with 2409 g of ethanol containing 8 wt.% of water and extracted again via stirring the suspension with a magnetic stirring bar at room temperature. After 15 minutes the suspension was centrifuged at 25 °C for 11 minutes at 6000 g to provide a faint yellow liquid fraction. The faint yellow liquid fraction of about 2400 g obtained was denominated Liquid Fraction 2.

The Liquid Fraction 1 and the Liquid Fraction 2 were joined and then evaporated with a rotary evaporator immerged into a 50 °C warm bath at a reduced pressure. Once the internal pressure of the rotary evaporator reached 25 mBar the evaporation was stopped. The solvent-free extract obtained was about 41.2 g, which corresponds to a yield of about 21.8 wt.% of the starting liquid yolk. The composition of the final extract was about 30 wt.% phospholipids and about 50-60 wt.% triglycerides. The final extract can be filtered by any suitable means, such as with paper filter (e.g., 10µm, 1µm, or 0.45 µm) to provide a final product.

## Claims

1. A method for providing a composition with high amounts of omega-3 phospholipids comprising:
contacting undried fish roe with a polar solvent and mixing the roe and solvent to form a first mixture;
filtering the first mixture to remove solid particles larger than 1 µm in size, to provide a solution of the polar solvent comprising extracted lipids;
subjecting the solution to membrane filtration wherein the membrane has a MWCO of 300 Daltons, to provide a retentate comprising greater than 10 dry wt.% lipids;
wherein at least 40% of the total fatty acid moieties of the retentate are omega-3 fatty acids, the fatty acid moieties of the retentate comprise docosahexaenoic acid (DHA) and eicosapentaenoic acid (EPA), and the DHA to EPA ratio is at least 2:1;
wherein the retentate comprises less than 2 wt.% ash content, based on dry weight.

2. The method of claim 1 wherein the retentate is subjected to drying under reduced pressure to provide a solid.

3. The method of claim 1 wherein the fish roe is immature herring roe, immature salmon roe, immature mackerel roe, immature menhaden roe, or a combination thereof.

4. The method of claim 3 wherein the retentate comprises 50 wt.% to 95 wt.% phospholipids, and 30-70 wt.% of the total fatty acid moieties in the phospholipids are omega-3 fatty acids, based on dry weight.

5. The method of claim 4 wherein the retentate comprises at least 50 wt.% of phosphatidylcholine, with respect to the total weight of the composition.

6. The method of any one of claims 1-5 wherein the fish roe is a non-waxy fish roe wherein the wax content of the roe is less than 40 wt.%.

7. The method of any one of claims 1-5 wherein the retentate comprises greater than 20 dry wt.% lipids, optionally greater than 30 dry wt.% lipids, optionally greater than 40 dry wt.% lipids.

8. The method of any one of claims 1-5 wherein the retentate comprises 1 wt.% ash content or less, based on dry weight.

9. The method of any one of claims 1-5 wherein the retentate comprises less than 5% lead ions compared to the initial concentration found in the undried fish roe relative to the total lipid amount.

10. A method of producing a phospholipid extract with low PCBs, PCDDs, PCDFs and PAHs content comprising:
contacting phospholipid-rich marine fish roe having 5 wt.% or less wax content with a polar solvent and mixing the roe and the solvent to form a first mixture;
filtering the first mixture to remove solid particles larger than 1µm in size, to provide a solution of the polar solvent comprising lipids and phospholipids;
passing the solution through a nanofiltration membrane having a MWCO of 300 Daltons, to provide a retentate comprising less than 10% of the initial polar solvent
wherein at least 40% of the total fatty acid moieties of the retentate are omega-3 fatty acids, the fatty acid moieties of the retentate comprise docosahexaenoic acid (DHA) and eicosapentaenoic acid (EPA), and the DHA to EPA ratio is at least 2:1; and wherein the retentate comprises less than 2 wt. % ash content

11. The method of claim 10 wherein the dry weight of the retentate comprises 1 wt.% or less ash content, optionally wherein the retentate comprises less than 5% lead ions compared to the initial concentration found in the lipid fraction of the undried fish roe.

12. A method for providing a composition with high amounts of phospholipids comprising:
contacting avian egg yolks with a polar solvent and mixing the egg yolks and solvent to form a first mixture;
filtering the first mixture to remove solid particles larger than 1 µm in size, to provide a solution of the polar solvent comprising extracted lipids;
subjecting the solution to membrane filtration wherein the membrane has a MWCO of 300 Daltons, to provide a retentate comprising greater than 10 dry wt.% lipids;
wherein the retentate comprises 20 wt.% to 50 wt.% phospholipids; and
wherein the retentate comprises less than 2 wt.% ash content, based on dry weight,
optionally wherein the avian egg yolk is a chicken egg yolk.

13. The method of claim 12 wherein the retentate is subjected to drying under reduced pressure to provide a solid.

14. The method of any one of claims 1-5 or 12-13, wherein the retentate is **characterized by** a bright yellow color.

## Patentansprüche

1. Verfahren zum Bereitstellen einer Zusammensetzung mit hohen Mengen an Omega-3-Phospholipiden, Folgendes umfassend:
Inberührungbringen von ungetrocknetem Fischrogen mit einem polaren Lösungsmittel und Mischen des Rogens und des Lösungsmittels, um eine erste Mischung auszubilden;
Filtrieren der ersten Mischung, um Feststoffpartikel mit einer Größe von mehr als 1 µm zu entfernen, um eine Lösung des polaren Lösungsmittels bereitzustellen, die extrahierte Lipide umfasst;
Unterziehen der Lösung einer Membranfiltration, wobei die Membran einen MWCO von 300 Dalton aufweist, um ein Retentat bereitzustellen, das mehr als 10 Trockengew.-% Lipide umfasst;
wobei wenigstens 40 % der gesamten Fettsäuremolekülteile des Retentats Omega-3-Fettsäuren sind, wobei die Fettsäuremolekülteile des Retentats Docosahexaensäure (*docosahexaenoic acid -* DHA) und Eicosapentaensäure (*eicosapentaenoic acid -* EPA) umfassen und das Verhältnis von DHA zu EPA wenigstens 2 : 1 beträgt;
wobei das Retentat weniger als 2 Gew.-% Aschegehalt, basierend auf einem Trockengewicht, umfasst.

2. Verfahren nach Anspruch 1, wobei das Retentat einem Trocknen unter reduziertem Druck unterzogen wird, um einen Feststoff bereitzustellen.

3. Verfahren nach Anspruch 1, wobei der Fischrogen unreifer Heringsrogen, unreifer Lachsrogen, unreifer Makrelenrogen, unreifer Menhadenrogen oder eine Kombination davon ist.

4. Verfahren nach Anspruch 3, wobei das Retentat 50 Gew.-% bis 95 Gew.-% Phospholipide umfasst und wobei 30-70 Gew.-% der gesamten Fettsäuremolekülteile in den Phospholipiden Omega-3-Fettsäuren sind, basierend auf dem Trockengewicht.

5. Verfahren nach Anspruch 4, wobei das Retentat wenigstens 50 Gew.-% Phosphatidylcholin hinsichtlich des Gesamtgewichts der Zusammensetzung umfasst.

6. Verfahren nach einem der Ansprüche 1-5, wobei der Fischrogen ein wachsarmer Fischrogen ist, wobei der Wachsgehalt des Fischrogens weniger als 40 Gew.-% beträgt.

7. Verfahren nach einem der Ansprüche 1-5, wobei das Retentat mehr als 20 Trockengew.-% Lipide, optional mehr als 30 Trockengew.-% Lipide, optional mehr als 40 Trockengew.-% Lipide umfasst.

8. Verfahren nach einem der Ansprüche 1-5, wobei das Retentat höchstens 1 Gew.-% Aschegehalt, basierend auf dem Trockengewicht, umfasst.

9. Verfahren nach einem der Ansprüche 1-5, wobei das Retentat weniger als 5 % Bleiionen umfasst, verglichen mit der Anfangskonzentration, die in dem ungetrockneten Fischrogen relativ zu der Gesamtlipidmenge gefunden wurde.

10. Verfahren zum Herstellen eines Phospholipidextraktes mit niedrigem Gehalt an PCBs, PCDDs, PCDFs und PAHs, Folgendes umfassend:
Inberührungbringen von phospholipidreichem Meeresfischrogen mit höchstens 5 Gew.-% Wachsgehalt mit einem polaren Lösungsmittel und Mischen des Rogens und des Lösungsmittels, um eine erste Mischung auszubilden;
Filtrieren der ersten Mischung, um Feststoffpartikel mit einer Größe von mehr als 1 µm zu entfernen, um eine Lösung des polaren Lösungsmittels bereitzustellen, die Lipide und Phospholipide umfasst;
Durchleiten der Lösung durch eine Nanofiltrationsmembran, die einen MWCO von 300 Dalton aufweist, um ein Retentat bereitzustellen, das weniger als 10 % des anfänglichen polaren Lösungsmittels umfasst,
wobei wenigstens 40 % der gesamten Fettsäuremolekülteile des Retentats Omega-3-Fettsäuren sind, wobei die Fettsäuremolekülteile des Retentats Docosahexaensäure (DHA) und Eicosapentaensäure (EPA) umfassen und das Verhältnis von DHA zu EPA wenigstens 2 : 1 beträgt; und wobei das Retentat weniger als 2 Gew.-% Aschegehalt umfasst.

11. Verfahren nach Anspruch 10, wobei das Trockengewicht des Retentats höchstens 1 Gew.-% Aschegehalt umfasst, optional wobei das Retentat weniger als 5 % Bleiionen umfasst, verglichen mit der Anfangskonzentration, die in der Lipidfraktion des ungetrockneten Fischrogens zu finden ist.

12. Verfahren zum Bereitstellen einer Zusammensetzung mit hohen Mengen von Phospholipiden, Folgendes umfassend:
Inberührungbringen von Vogeleigelb mit einem polaren Lösungsmittel und Mischen des Eigelbes und des Lösungsmittels, um eine erste Mischung auszubilden;
Filtrieren der ersten Mischung, um Feststoffpartikel mit einer Größe von mehr als 1 µm zu entfernen, um eine Lösung des polaren Lösungsmittels bereitzustellen, die extrahierte Lipide umfasst;
Unterziehen der Lösung einer Membranfiltration, wobei die Membran einen MWCO von 300 Dalton aufweist, um ein Retentat bereitzustellen, das mehr als 10 Trockengew.-% Lipide umfasst;
wobei das Retentat 20 Gew.-% bis 50 Gew.-% Phospholipide umfasst; und
wobei das Retentat weniger als 2 Gew.-% Aschegehalt, basierend auf dem Trockengewicht, umfasst, optional wobei das Vogeleigelb ein Hühnereigelb ist.

13. Verfahren nach Anspruch 12, wobei das Retentat einem Trocknen unter reduziertem Druck unterzogen wird, um einen Feststoff bereitzustellen.

14. Verfahren nach einem der Ansprüche 1-5 oder 12-13, wobei das Retentat durch eine hellgelbe Farbe gekennzeichnet ist.

## Revendications

1. Procédé permettant de fournir une composition avec de grandes quantités de phospholipides oméga-3 comprenant :
la mise en contact des œufs de poisson non séchés avec un solvant polaire et l'action de mélanger les œufs et le solvant pour former un premier mélange ;
la filtration du premier mélange pour éliminer les particules solides de taille supérieure à 1 µm, afin d'obtenir une solution du solvant polaire comprenant des lipides extraits ;
la soumission de la solution à une filtration sur membrane, la membrane présentant un MWCO de 300 daltons, afin d'obtenir un rétentat comprenant plus de 10 % en poids sec de lipides ;
dans lequel au moins 40 % du total des fractions d'acides gras du rétentat sont des acides gras oméga-3, les fractions d'acide gras du rétentat comprennent de l'acide docosahexaénoïque (ADH) et de l'acide eicosapentaénoïque (AEP), et le rapport entre l'ADH et l'AEP est d'au moins 2:1 ;
dans lequel le rétentat comprend moins de 2 % en poids de teneur en cendres, par rapport au poids sec.

2. Procédé selon la revendication 1, dans lequel le rétentat est soumis à un séchage sous pression réduite pour fournir un solide.

3. Procédé selon la revendication 1, dans lequel l'œuf de poisson est un œuf de jeune hareng, un œuf de jeune saumon, un œuf de jeune maquereau, un œuf de jeune menhaden ou une combinaison de ceux-ci.

4. Procédé selon la revendication 3, dans lequel le rétentat comprend 50 % à 95 % en poids de phospholipides, et 30 à 70 % en poids du nombre total de fractions d'acide gras dans les phospholipides sont des acides gras oméga-3, par rapport au poids sec.

5. Procédé selon la revendication 4, dans lequel le rétentat comprend au moins 50 % en poids de phosphatidylcholine, par rapport au poids total de la composition.

6. Procédé selon l'une quelconque des revendications 1 à 5, dans lequel l'œuf de poisson est un œuf de poisson non cireux, dans lequel la teneur en cire de l'œuf est inférieure à 40 % en poids.

7. Procédé selon l'une quelconque des revendications 1 à 5, dans lequel le rétentat comprend plus de 20 % en poids sec de lipides, éventuellement plus de 30 % en poids sec de lipides, éventuellement plus de 40 % en poids sec de lipides.

8. Procédé selon l'une quelconque des revendications 1 à 5, dans lequel le rétentat comprend 1 % en poids de teneur en cendres ou moins, par rapport au poids sec.

9. Procédé selon l'une quelconque des revendications 1 à 5, dans lequel le rétentat comprend moins de 5 % d'ions de plomb par rapport à la concentration initiale trouvée dans l'œuf de poisson non séché par rapport à la quantité totale de lipides.

10. Procédé de production d'un extrait de phospholipide à faible teneur en PCB, PCDD, PCDF et HAP comprenant :
la mise en contact des œufs de poisson de mer riches en phospholipides ayant 5 % en poids ou moins de teneur en cire avec un solvant polaire et l'action de mélanger les œufs et le solvant pour former un premier mélange ;
la filtration du premier mélange pour éliminer les particules solides de taille supérieure à 1 µm, afin d'obtenir une solution du solvant polaire comprenant des lipides et des phospholipides ;
le passage de la solution à travers une membrane de nanofiltration présentant un MWCO de 300 daltons, afin d'obtenir un rétentat comprenant moins de 10 % du solvant polaire initial, dans lequel au moins 40 % du total des fractions d'acides gras du rétentat sont des acides gras oméga-3, les fractions d'acide gras du rétentat comprenant l'acide docosahexaénoïque (ADH) et l'acide eicosapentaénoïque (AEP), et le rapport entre l'ADH et l'AEP étant d'au moins 2:1 ; et
dans lequel le rétentat comprend moins de 2 % en poids de teneur en cendres.

11. Procédé selon la revendication 10, dans lequel le poids sec du rétentat comprend 1 % en poids ou moins de teneur en cendres, le rétentat comprenant éventuellement moins de 5 % d'ions de plomb par rapport à la concentration initiale trouvée dans la fraction lipidique de l'œuf de poisson non séché.

12. Procédé permettant de fournir une composition avec de grandes quantités de phospholipides comprenant :
la mise en contact des jaunes œufs aviaires avec un solvant polaire et l'action de mélanger les jaunes œufs et le solvant pour former un premier mélange ;
la filtration du premier mélange pour éliminer les particules solides de taille supérieure à 1 µm, afin d'obtenir une solution du solvant polaire comprenant des lipides extraits ;
la soumission de la solution à une filtration sur membrane, la membrane présentant un MWCO de 300 daltons, afin d'obtenir un rétentat comprenant plus de 10 % en poids sec de lipides ;
dans lequel le rétentat comprend 20 % en poids à 50 % en poids de phospholipides ; et
dans lequel le rétentat comprend moins de 2 % en poids de teneur en cendres, par rapport au poids sec, éventuellement dans lequel le jaune d'œuf aviaire est un jaune d'œuf de poule.

13. Procédé selon la revendication 12, dans lequel le rétentat est soumis à un séchage sous pression réduite pour fournir un solide.

14. Procédé selon l'une quelconque des revendications 1 à 5 ou 12 à 13, dans lequel le rétentat est **caractérisé par** une couleur jaune vif.
